Europäisches Patentamt

European Patent Office

Office européen des brevets

(19)

(11) Veröffentlichungsnummer : **0 080 558**
**B1**

(12) **EUROPÄISCHE PATENTSCHRIFT**

(45) Veröffentlichungstag der Patentschrift :
28.05.86

(51) Int. Cl.⁴ : **F 16 B 37/04**

(21) Anmeldenummer : **82107277.4**

(22) Anmeldetag : **11.08.82**

(54) **Gewindeeinsatz.**

(30) Priorität : **26.11.81 DE 3146995**

(43) Veröffentlichungstag der Anmeldung :
**08.06.83 Patentblatt 83/23**

(45) Bekanntmachung des Hinweises auf die Patenterteilung : **28.05.86 Patentblatt 86/22**

(84) Benannte Vertragsstaaten :
**DE FR GB IT SE**

(56) Entgegenhaltungen :
**DE-A- 1 575 324**
**DE-A- 1 900 911**
**DE-B- 1 500 763**
**DE-U- 1 955 717**
**FR-A- 1 410 669**
**FR-A- 1 433 774**
**GB-A- 1 158 907**
**US-A- 3 683 740**

(73) Patentinhaber : **Böllhoff & Co, GmbH & Co KG**
**Archimedesstrasse 1-4**
**D-4800 Bielefeld 14 (DE)**

(72) Erfinder : **Kobusch, Klaus**
**Torfstichweg 8**
**D-4800 Bielefeld 1 (DE)**

(74) Vertreter : **Dipl.-Ing. H. Hauck Dipl.-Phys. W. Schmitz**
**Dipl.-Ing. E. Graalfs Dipl.-Ing. W. Wehnert Dr.-Ing. W.**
**Döring**
**Mozartstrasse 23**
**D-8000 München 2 (DE)**

EP 0 080 558 B1

**Beschreibung**

Die Erfindung betrifft einen Gewindeeinsatz, bestehend aus einer in eine Bohrung eines Werkstückes einsetzbaren Verankerungshülse und einer mit dieser über eine Sollbruchstelle verbundenen Gewindebuchse, die mit Vorsprüngen versehen ist zur Verdrehsicherung mit der Verankerungshülse und die während des Setzvorgangs mittels eines Werkzeuges in die Verankerungshülse gezogen wird, wobei die Verankerungshülse verformt und in die Bohrungswandung eingepreßt wird (GB-A-11 58 907).

Bei bekannten Gewindeeinsätzen wird meist der Gewindebereich in die Aufnahmebohrung des Werkstückes eingeführt und dann durch Druck auf den Verankerungsabschnitt die Sollbruchstelle abgeschert und der Verankerungsabschnitt in den Ringraum zwischen der Gewindebuchse und der Aufnahmebohrung des Werkstückes eingeschoben. Dabei werden Vorsprünge des Verankerungsabschnittes in die Wandung des Werkstückes eingedrückt.

Es wird Material des Werkstücks in radialer und auch axialer Richtung verdrängt. Eine axiale Verdrängung von Material verschlechtert jedoch die Verankerung. Ferner ist zum Einpressen ein Widerlager erforderlich. Außerdem werden beim Einbau Druckkräfte bzw. Schläge auf das Werkstück aufgebracht.

Es ist auch bekannt, den Gewindeeinsatz in die Aufnahme bohrung einzuführen und danach die Gewindebuchse bis zur Oberfläche des Werkstückes in die Verankerungshülse hineinzuziehen, wobei sich diese verformt und an der Wandung der Aufnahmebohrung im Werkstück gepreßt wird. Dies hat den Vorteil, daß für den Einbau kein Widerlager erforderlich ist und der Einbau auch in einfacher Weise in Durchgangsbohrungen möglich ist. Die Befestigung wird allein durch Reibungskräfte zwischen der Verankerungshülse und der Aufnahmebohrung bzw. der Gewindebuchse vermittelt.

Die der Erfindung zugrundeliegende Aufgabe besteht darin, den Gewindeeinsatz der eingangs geschilderten Art so auszubilden, daß sehr hohe Verankerungskräfte des Gewindeeinsatzes und eine sehr hohe Verdrehsicherheit der Gewindebuchse in der Verankerungshülse erzielt werden.

Diese Aufgabe ist erfindungsgemäß dadurch gelöst, daß die innerhalb der Aufnahmebohrung liegende Außenwand der Verankerungshülse mit Vorsprüngen versehen ist, die beim Aufweiten der Verankerungshülse radial in die Aufnahmebohrung eingedrückt werden und die Gewindebuchse eine innerhalb der Aufnahmebohrung liegende Anschlagschulter aufweist, die mittels der axialen Ziehbewegung der Gewindebuchse in Anlage an die Stirnseite der Verankerungshülse anlegbar ist.

Der Einbau erfolgt in eine glatte Aufnahmebohrung des Werkstückes ohne Ansenkung. In die Gewindebuchse wird ein mit Gewinde versehener Zugdorn des Einbauwerkzeuges eingeschraubt, darauf der Gewindeeinsatz in die Bohrung eingeführt und durch eine axiale Zugbewegung des Zugdorns gesetzt, wobei zuerst die Gewindebuchse an der Sollbruchstelle abschert und dann infolge der geraden Rändelung verdrehgesichert in die Verankerungshülse eingezogen wird. Es werden dabei keine Einbaukräfte auf das Werkstück übertragen. Eine genaue Bohrungstiefe ist nicht notwendig und der Einbau in Durchgangslöcher möglich. Ferner kann der Einbau bündig zur Oberfläche des Werkstückes erfolgen, ohne daß ein Widerlager erforderlich ist. Beim Einziehen der Gewindebuchse wird die Verankerungshülse lediglich in radialer Richtung aufgeweitet und werden ihre Vorsprünge in die Aufnahmebohrung eingedrückt, ohne daß ein Verdrängen des Aufnahmematerials in axialer Richtung erfolgt. Dadurch werden die Verankerungskräfte erhöht.

Das Einziehen erfolgt bis sich die Anschlagschulter der Gewindebuchse an die Stirnseite der Verankerungshülse anlegt. Ist dieser Formschluß erreicht, so steigt die Auszugskraft steil an und es erfolgt kein weiteres Setzen des Einsatzes mehr durch den Zugdorn oder die später eingebrachte Schraube. Durch den Formschluß der Verankerungshülse mit dem Werkstück über die Vorsprünge und der Gewindebuchse mit der Verankerungshülse über die gerade Rändelung erfolgt eine bessere Verankerung und höhere Festigkeit.

Vorteilhafte Weiterbildungen sind in den Unteransprüchen gekennzeichnet.

Ist die Außenwand der Verankerungshülse nach Anspruch 2 mit einer Kreuzrändel versehen, so werden sehr hohe Verdreh- und Auszugswerte zwischen Werkstück und Verankerungshülse erzielt.

Nach Anspruch 3 ist zwischen der Anschlagschulter und dem Kegelabschnitt der Gewindebuchse ein zylindrischer Abschnitt vorgesehen, der mit der geraden Rändel versehen ist. Damit ergibt sich eine hohe Verdrehsicherheit zwischen der Gewindebuchse und der Verankerungshülse.

Ferner ist der Winkel des Kegelabschnitts zwischen der Sollbruchstelle und der geraden Rändelung der Gewindebuchse verhältnismäßig klein, vorzugsweise etwa 15°. Damit ergeben sich verhältnismäßig geringe Einbaukräfte, die mit Sicherheit unterhalb der Belastungsgrenze des Zugdornes gehalten werden.

Schließlich ist die Länge der Verankerungshülse gleich der Länge der Gewindebuchse zwischen der Anschlagschulter und dem an der Sollbruchstelle liegenden Ende. Damit ergibt sich ein bündiger Einbau von Gewindebuchse und Verankerungshülse und eine saubere Oberfläche.

Ein Ausführungsbeispiel der Erfindung ist nachstehend anhand der Zeichnung näher erläutert. Es zeigt :

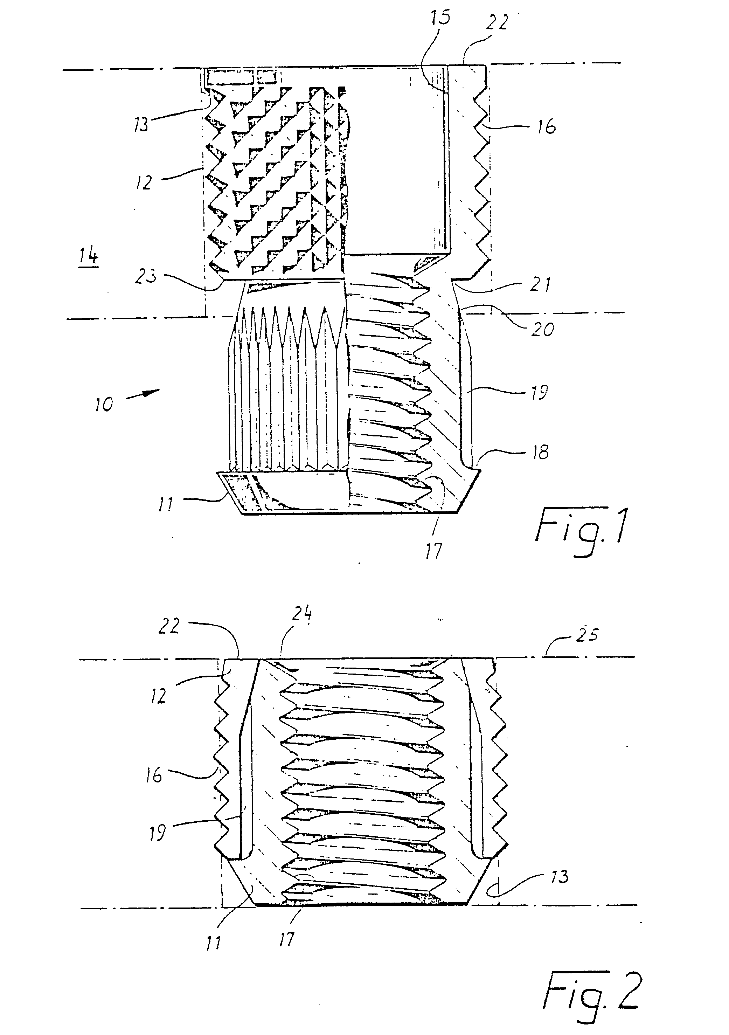

Figur 1   eine Seitenansicht bzw. einen Schnitt durch den Gewindeeinsatz vor dem Einbau und

Figur 2   einen Schnitt durch den Gewindeeinsatz im eingebauten Zustand.

Der Gewindeeinsatz 10 besteht aus einer Gewindebuchse 11 und einer Verankerungshülse 12. Der Durchmesser der Verankerungshülse 12 ist so bemessen, daß er leicht in eine Bohrung 13 eines Werkstückes 14 einsetzbar ist. Die Bohrung 13 ist als Durchgangsbohrung dargestellt.

Die Verankerungshülse weist eine zylindrische Innenfläche 15 und an der Außenseite eine Kreuzrändelung 16 auf.

Die Gewindebuchse 11 ist mit einem Gewinde 17 versehen, das zur Aufnahme der zu befestigenden Schraube dient. An eine Anschlagschulter 18 schließt sich ein zylindrischer Abschnitt an, der mit einer geraden Rändel 19 versehen ist. Hieran schließt sich ein Kegelabschnitt 20. Der Winkel des Kegelabschnitts zur Längsachse beträgt etwa 15°. Über die Sollbruchstelle 21 ist die Gewindebuchse 11 mit der Verankerungshülse 12 verbunden.

Zum Einbau des Gewindeeinsatzes 10 wird ein Zugdorn des nicht dargestellten Einbauwerkzeuges von der Verankerungshülse 12 her in das Gewinde 17 der Gewindebuchse 11 eingeschraubt, worauf dem Dorn eine Ziehbewegung erteilt wird, wobei die Setzkräfte von dem Stirnende 22 der Verankerungshülse 12 auf eine Anschlagschulter des Einbauwerkzeuges abgestützt werden. Diese Anschlagschulter liegt außerdem beim Ziehvorgang an der Werkstückoberfläche 25 auf. Beim Einziehvorgang wird zunächst die Sollbruchstelle 21 abgeschert, worauf die Gewindebuchse in die Verankerungshülse eingezogen wird, die durch den Kegelabschnitt 20 radial aufgeweitet wird, wobei sich die Kreuzrändel 16 in die Aufnahmebohrung 13 und die gerade Rändelung 19 in die Verankerungshülse einpressen.

Dieser Vorgang setzt sich fort, bis die Anschlagkante 18 auf die Stirnfläche 23 der Verankerungshülse aufsitzt. In dieser Lage ist ein bündiger Abschluß zwischen der unteren Stirnfläche 22 der Verankerungshülse und der Ringfläche 24 der Gewindebuchse 11 erreicht.

**Patentansprüche**

1. Gewindeeinsatz (10), bestehend aus einer in eine Aufnahmebohrung (13) eines Werkstückes (14) einsetzbaren Verankerungshülse (12) und einer mit dieser über eine Sollbruchstelle (21) verbundenen Gewindebuchse (11), die mit Vorsprüngen (19) versehen ist zur Verdrehsicherung mit der Verankerungshülse und die während des Setzvorgangs mittels eines Werkzeuges in die Verankerungshülse gezogen wird, wobei die Verankerungshülse verformt in die Bohrungswandung eingepreßt wird, dadurch gekennzeichnet, daß

a) die innerhalb der Aufnahmebohrung (13) liegende Außenwand der Verankerungshülse (12) mit Vorsprüngen (16) versehen ist, die beim Aufweiten der Verankerungshülse (12) radial in die Aufnahmebohrung (13) eingedrückt werden und

b) die Gewindebuchse (11) eine innerhalb der Aufnahmebohrung (13) liegende Anschlagschulter (18) aufweist, die mittels der axialen Ziehbewegung der Gewindebuchse (11) in Anlage an die Stirnseite (23) der Verankerungshülse (12) anlegbar ist.

2. Gewindeeinsatz nach Anspruch 1, dadurch gekennzeichnet, daß die Außenwand der Verankerungshülse (12) mit einer Kreuzrändel (16) versehen ist.

3. Gewindeeinsatz nach Anspruch 1 oder 2, dadurch gekennzeichnet, daß ein zylindrischer Abschnitt der Gewindebuchse (11) zwischen der Anschlagschulter (18) und dem Kegelabschnitt (20) mit einer geraden Rändelung (19) versehen ist.

4. Gewindeeinsatz nach Anspruch 3, dadurch gekennzeichnet, daß der Winkel des Kegelabschnitts (20) zwischen der Sollbruchstelle (21) und der geraden Rändelung (19) verhältnismäßig flach, vorzugsweise etwa 15° ist.

5. Gewindeeinsatz nach einem der Ansprüche 1 bis 4, dadurch gekennzeichnet, daß die Länge der Verankerungshülse (12) gleich der Länge der Gewindebuchse (11) zwischen der Anschlagschulter (18) und dem an der Sollbruchstelle (21) liegenden Ende ist.

**Claims**

1. A threaded insert (10), comprising an anchoring sleeve (12) to be inserted in a bore (13) of a workpiece (14) and a threaded base (11) to which said anchoring sleeve is connected via a predetermined breaking joint (21), said threaded base having projections (19) for nonrotatably securing to said anchoring sleeve and said threaded base being pulled into said anchoring sleeve by a tool means during assembling, wherein said anchoring sleeve deformed is locked in the wall of said bore, characterized in that

a) the outer wall of said anchoring sleeve (12) lying within said bore (13) is provided with projections (16) which are radially pressed in said bore (13) when said anchoring sleeve (12) is expanded and

b) said threaded base (11) includes an abutment shoulder (18) lying within said bore (13), said shoulder contacting the forward face (23) of said anchoring sleeve (12) when axially pulling said base (11).

2. The threaded insert of claim 1, characterized in that the outer wall of said anchoring sleeve (12) is provided with a cross knurl (16).

3. The threaded insert of claim 1 or 2, characterized in that a cylindrical portion of said threaded base (11) between said abutment shoulder (18) and a tapered portion (20) is provided with a linear knurl (19).

4. The threaded insert of claim 3, characterized in that the angle of said tapered portion (20) between the predetermined breaking joint (21) and said linear knurl (19) is relatively flat, preferably about 15°.

5. The threaded insert of one of the claims 1 to 4, characterized in that the length of said anchoring sleeve (12) is equal the length of said threaded base (11) between said abutment shoulder (18) and the end facing said predetermined breaking joint (21).

## Revendications

1. Insert taraudé (10) constitué d'un manchon d'ancrage (12) susceptible d'être introduit dans un trou de réception (13) d'une pièce (14), et d'une bague filetée (11) reliée à ce manchon par une zone de rupture préférentielle (21), pourvue de saillies (19) pour l'immobiliser en rotation par rapport audit manchon, et qui, pendant le processus de mise en place, est tirée à l'aide d'un outil à l'intérieur dudit manchon d'ancrage, de telle façon que ce dernier est déformé et vient s'imprimer dans la paroi du trou, caractérisé en ce que :

a) la paroi externe du manchon d'ancrage (12), qui se trouve à l'intérieur du trou de réception (13) est pourvue de saillies (16) qui sont enfoncées à force radialement dans le trou de réception lors de l'élargissement du manchon, et

b) la bague filetée (11) présente un épaulement d'appui (18) qui se trouve à l'intérieur du trou de réception (13) et qui peut venir s'appliquer contre la face frontale (23) du manchon d'ancrage (12), par l'effet du déplacement de traction de la bague filetée (11).

2. Insert taraudé selon la revendication 1, caractérisé en ce que la paroi externe du manchon d'ancrage (12) présente un moletage à croisure.

3. Insert taraudé selon la revendication 1 ou 2, caractérisé en ce qu'une partie cylindrique, située entre l'épaulement d'appui (18) et une partie conique (20) de la bague filetée est pourvue d'un moletage axial (19).

4. Insert taraudé selon la revendication 3, caractérisé en ce que l'angle de la partie conique (20) entre la zone de rupture préférentielle (21) et le moletage axial (19) est relativement faible, de préférence environ 15°.

5. Insert taraudé selon l'une des revendications 1 à 4, caractérisé en ce que la longueur du manchon d'ancrage (12) est égale à la longueur de la bague filetée (11) entre l'épaulement d'appui (18) et l'extrémité située au niveau de la zone de rupture préférentielle (21).

*Fig.1*

*Fig.2*